# EUROPEAN PATENT SPECIFICATION

(11) **EP 1 502 768 B1**
(45) Date of publication and mention of the grant of the patent: **28.11.2007**
(21) Application number: 04018126.5
(22) Date of filing: 30.07.2004
(51) Int. Cl.: B60B 21/06

(54) **Bicycle Rim**
Fahrradfelge
Jante de bicyclette

(30) Priority: 01.08.2003 US 631863
(43) Date of publication of application: 02.02.2005
(73) Proprietor: SHIMANO INC., Osaka 590-8577 (JP)
(72) Inventor: Okajima, Shinpei, Osaka (JP)
(74) Representative: Hofmann, Harald

(56) References cited:
- EP-A- 0 714 791
- EP-A- 0 818 329
- EP-A- 1 431 069
- US-A1- 2001 005 099
- US-B1- 6 431 658

## Description

### BACKGROUND OF THE INVENTION

### Field of the Invention

This invention generally relates to a bicycle wheel. More specifically, the present invention relates to a bicycle wheel that has a reinforced rim.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the frame of the bicycle. One component that has been extensively redesigned is the bicycle wheel. Bicycle wheels are constantly being redesigned to be strong, lightweight and more aerodynamic in design as well as to be simple to manufacture and assemble.

There are many different types of bicycle wheels, which are currently available on the market. Most bicycle wheels have a hub portion, a plurality of spokes and an annular rim. The hub portion is attached to a part of the frame of the bicycle for relative rotation. The inner ends of the spokes are coupled to the hub and extend outwardly from the hub. The annular rim is coupled to the outer ends of the spokes and has an outer portion for supporting a pneumatic tire thereon. Typically, the spokes of the bicycle wheel are thin metal wire spokes. The ends of the hub are usually provided with flanges that are used to couple the spokes to the hub. In particular, holes are provided in the hub flanges. The wire spokes are usually bent on their inner end and provided with a flange that is formed in the shape of a nail head. The inner end is supported in one of the holes in one of the hub flanges. The outer ends of the spokes typically are provided with threads for engaging spoke nipples, which secure the outer ends of the wire spokes to holes in the rim.

The above types of wheels have been designed for use with tube tires or tubeless tires. Typically, tubeless tire wheels have an annular seal arranged to seal the spoke attachment openings of the rim. Rims designed for tube tires also often have an annular member covering the spoke attachments. In any case, these typical types of wheels can be expensive and complicated to manufacture and assemble. Moreover, these typical wheels are not always as strong and lightweight, as desired. Furthermore, with these typical wheels it can be difficult, complicated and/or expensive to replace a spoke or spokes.

In view of the above, it will be apparent to those skilled in the art from this disclosure that there exists a need for an improved bicycle rim for a bicycle wheel. This invention addresses this need in the art as well as other needs, which will become apparent to those skilled in the art from this disclosure.

US 2001/005099 A discloses a bicycle rim according to the preamble of claim 1. Threaded inserts are used to couple the outer and inner annular portions of the rim at the spoke attachment openings. Other prior art discloses inserts which are attached to the rim by means of deformation or by means of elastic deformable parts of the insert.

### SUMMARY OF THE INVENTION

One object of the present invention is to provide a bicycle wheel with a rim that is relatively strong yet relatively lightweight.

In particular, the object of the present invention is to provide a bicycle wheel with a rim that is relatively simple and inexpensive to manufacture and assemble.

Still another object of the present invention is to provide a method for making a rim that is relatively strong yet relatively lightweight.

The foregoing objects can basically be attained by providing a bicycle rim that includes an outer annular portion, an inner annular portion, a first tubular spoke attachment portion and a second tubular spoke attachment portion. The outer annular portion is adapted to receive a tire thereon. The outer annular portion has an outer spoke attachment opening. The inner annular portion is fixedly coupled with the outer annular portion to form an annular hollow area therebetween. The inner annular portion has an inner spoke attachment opening aligned with the outer spoke attachment opening. The first tubular spoke attachment portion is fixedly coupled to the outer annular portion at the outer spoke attachment opening. The second tubular spoke attachment portion is fixedly coupled to the inner annular portion at the inner spoke attachment opening. The first and second tubular spoke attachment portions define a spoke receiving space. According to the invention, at least one of the first and second tubular spoke attachment portions is heat fused to one of the outer and inner annular portions, respectively.

The foregoing objects can also basically be attained by providing a bicycle wheel that comprises a rim, a plurality of spokes and a central hub. The annular rim includes an outer annular portion, an inner annular portion, a plurality of first tubular spoke attachment portions and a plurality of second tubular spoke attachment portions. The outer annular portion is adapted to receive a tire thereon. The outer annular portion has a plurality of circumferentially spaced outer spoke attachment openings. The inner annular portion is fixedly coupled with the outer annular portion to form an annular hollow area therebetween. The inner annular portion has a plurality of circumferentially spaced inner spoke attachment openings aligned with the outer spoke attachment openings. The first tubular spoke attachment portions are fixedly coupled to the outer annular portion at the outer spoke attachment openings. Each of the first tubular spoke attachment portions has a first internal bore. The second tubular spoke attachment portions are fixedly and directly coupled to the inner annular portion at the inner spoke attachment openings. Each of the second tubular spoke attachment portions has a second internal bore that is aligned with one of the first internal bores to form a spoke receiving space. Each spoke receiving space is at least partially threaded. Each of the spokes includes an outer end portion, an inner end portion and an elongated central portion extending between the outer end portion and the inner end portion. Each of the outer end portions of the spokes is integrally formed with one of the elongated central portions as a one-piece, unitary member. Each of the outer end portions of the spokes is directly threadedly coupled within one of the spoke receiving spaces. The central hub has the inner end portions of the spokes coupled thereto.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle wheel with a spoked rim assembly in accordance with a first preferred embodiment of the present invention;

Figure 2 is an enlarged, partial side elevational view of the portion of the wheel identified by the circle 2 of Figure 1;

Figure 3 is an enlarged, partial side elevational view of the portion of the wheel identified by the circle 3 of Figure 1;

Figure 4 is an enlarged, partial side elevational view of the portion of the wheel identified by the circle 4 of Figure 1;

Figure 5 is a further enlarged, partial cross-sectional view of the portion of the wheel illustrated in Figure 2 as seen along section line 5-5 of Figure 2;

Figure 6 is a further enlarged, partial cross-sectional view of the portion of the wheel illustrated in Figure 3 as seen along section line 6-6 of Figure 3;

Figure 7 is a further enlarged, partial cross-sectional view of the portion of the wheel illustrated in Figure 4 as seen along section line 7-7 of Figure 4;

Figure 8 is an enlarged, partial cross-sectional view of the bicycle wheel illustrated in Figures 1-7, as seen along section line 8-8 of Figure 1, with the valve removed for the purpose of illustration;

Figure 9 is an enlarged, side elevational view of one of the reinforcement members illustrated in Figures 1-7;

Figure 10 is an outer end (i.e., radially outside) elevational view of the reinforcement member illustrated in Figure 9;

Figure 11 is an inner end (i.e., radially inside) elevational view of the reinforcement member illustrated in Figures 9-10;

Figure 12 is a cross-sectional view of the reinforcement member illustrated in Figures 9-11, as seen along section line 12-12 of Figure 9;

Figure 13 is a side elevational view of a bicycle wheel with a rim in accordance with a second preferred embodiment of the present invention;

Figure 14 is an enlarged, partial cross-sectional view of the wheel illustrated in Figure 13, as seen along section line 14-14 of Figure 13;

Figure 15 is a side elevational view of a bicycle wheel with a rim in accordance with a third preferred embodiment of the present invention;

Figure 16 is an enlarged, partial cross-sectional view of the wheel illustrated in Figure 15, as seen along section line 16-16 of Figure 15;

Figure 17 is a side elevational view of a bicycle wheel with a spoked rim assembly in accordance with a fourth preferred embodiment of the present invention;

Figure 18 is an enlarged, partial cross-sectional view of the wheel illustrated in Figure 17, as seen along section line 18-18 of Figure 17;

Figure 19 is a side elevational view of a bicycle wheel with a rim in accordance with a fifth preferred embodiment of the present invention; and

Figure 20 is an enlarged, partial cross-sectional view of the wheel illustrated in Figure 19, as seen along section line 20-20 of Figure 19.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

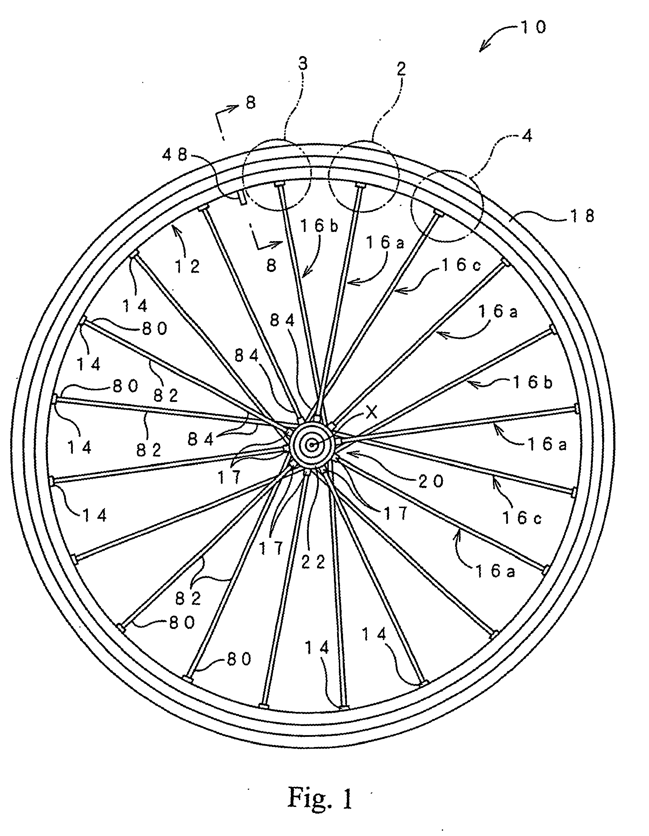

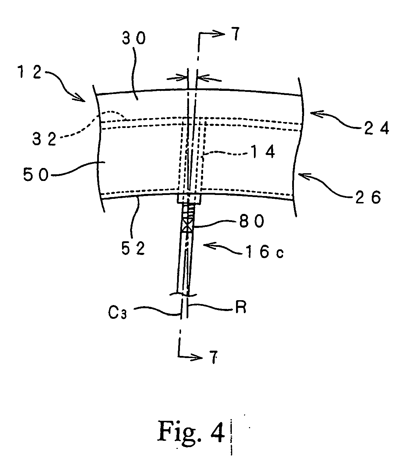

Referring initially to Figures 1-4, a bicycle wheel 10 is illustrated in accordance with a first embodiment of the present invention. The bicycle wheel 10 basically includes an annular rim 12 with a plurality of tubular reinforcement members 14, a plurality of spokes 16a, 16b and 16c, a pneumatic tire 18 and a center hub 20. The reinforcement members 14 are preferably separate members that are welded or brazed (i.e., heat fused) to the rim 12 in a circumferentially equally spaced arrangement in order to form permanent parts of the rim 12. The spokes 16a, 16b and 16c are coupled to the rim 12 via the reinforcement members 14 of the rim 12. The spokes 16a 16b and 16c are coupled to the center hub 20 via a plurality of conventional spoke nipples 17. The tire 18 is preferably a tubeless-type tire that is coupled to the rim 12. The bicycle wheel 10 is designed to rotate about a central rotation axis X of the center hub 20.

In the illustrated embodiments, the bicycle wheel 10 is designed as a rear bicycle wheel with a free wheel 22 coupled to one end of the center hub 20. The free wheel 22 is coupled to the center hub 20 in a conventional manner. Thus, the free wheel 22 will not be discussed and/or illustrated in detail herein. The bicycle wheel 10 preferably utilizes the spoking arrangement illustrated in Figure 1 in order to accommodate the free wheel 22. Specifically, the spokes 16a are preferably radial spokes that extend to one side of the center hub 20 (i.e., adjacent the free wheel 22), while the spokes 16b and 16c are preferably tangential spokes that extend to the opposite side of the center hub 20 (i.e., spaced from the free wheel 22).

In the illustrated embodiments, the bicycle wheel 10 is designed with a total of twenty spokes. More specifically, the bicycle wheel 10 preferably includes ten of the radial spokes 16a arranged in a circumferentially alternating manner between the tangential spokes 16b and 16c at the annular rim 12. Thus, the bicycle wheel 10 preferably includes five of the tangential spokes 16b and five of the tangential spokes 16c. The tangential spokes 16b and 16c are also preferably arranged in a circumferentially alternating manner relative to each other at the annular rim 12. Thus, at the rim 12, each of the spokes 16a has one of the spokes 16b and one of the spokes 16c coupled on opposite circumferential sides thereof, as best seen in Figure 1.

The spokes 16a, 16b and 16c are identical to each other, except for their orientations. However, the spokes 16a, 16b and 16c have been given different reference numerals for convenience in identifying the different orientations of the spokes 16a, 16b and 16c. The spokes 16a, 16b and 16c are preferably coupled to the annular rim 12 at equally spaced circumferential locations relative to each other. The spokes 16a, 16b and 16c are preferably coupled to the center hub 20 via the spoke nipples 17 (only ten shown). The spoke nipples 17 are threadedly coupled to the inner ends of spokes 16a, 16b and 16c, and retained by the center hub 22, as explained below.

Of course, it will be apparent to those skilled in the art from this disclosure that bicycle wheel 10 could use a modified rim and/or hub in order to accommodate different spoking arrangements such as all radial spokes or all tangential spokes as needed and/or desired. For example, a front bicycle wheel in accordance with the present invention could utilize all radial spokes that extend to opposite sides of a front hub (not shown) in an alternating manner if needed and/or desired. In any case, the rim 12 and the reinforcement members 14 are preferably designed to accommodate the desired spoking arrangement (i.e., the orientation of the spokes such as tangential, radial and/or the like).

Moreover, it will be apparent to those skilled in the art from this disclosure that the bicycle wheel 10 could use a modified rim and/or hub in order to accommodate fewer or more spokes, if needed and/or desired. Furthermore, it will be apparent to those skilled in the art from this disclosure that the bicycle wheel 10 could use spokes that are not coupled to the rim 12 at circumferentially equally spaced locations, if needed and/or desired. In any case, an equal number of total spokes are preferably coupled to the annular rim 12 in a circumferentially spaced arrangement.

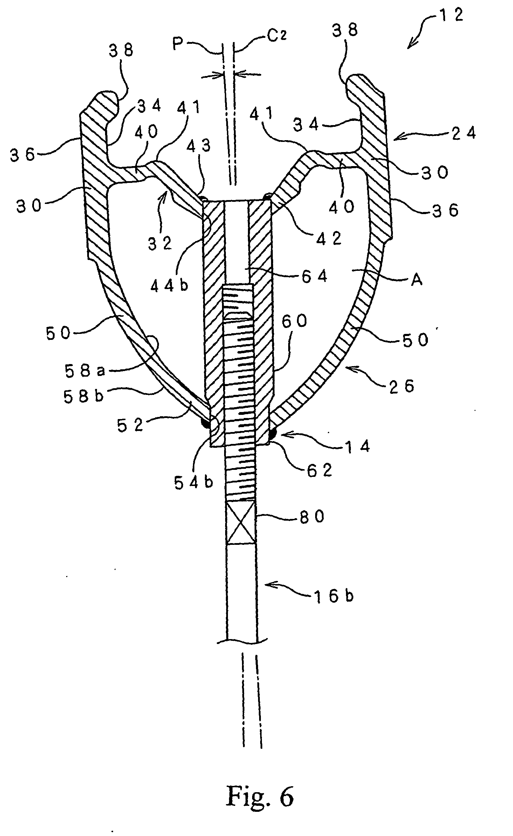

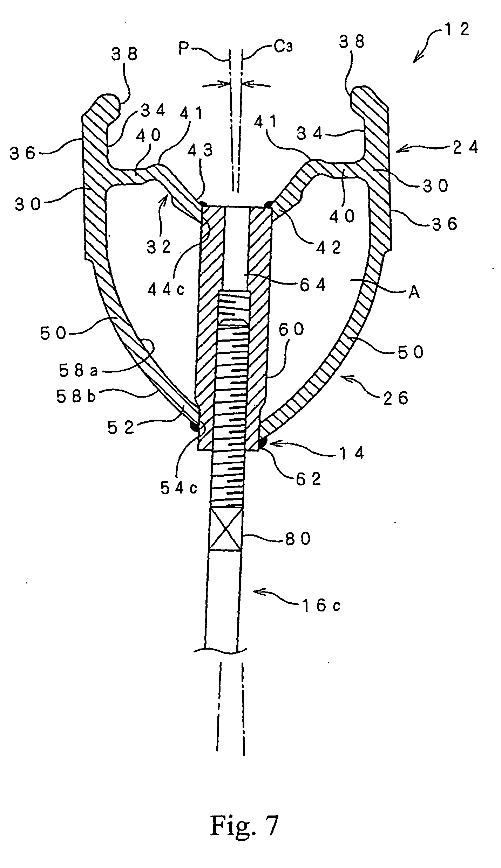

Referring now to Figures 1-8, the rim 12 will now be discussed in more detail. The rim 12 basically includes an outer annular portion 24, an inner annular portion 26 and the plurality of the reinforcement members 14. The inner annular portion 26 is fixedly coupled with the outer annular portion 24 to form an annular hollow area A. In particular, the inner annular portion 26 preferably has a U-shaped cross-section with the ends coupled to opposite axial sides of the outer annular portion 24 to form the annular hollow area A. The reinforcement members are preferably heat fused, such as by welding or brazing, to both the outer annular portion 24 and the inner annular portion 26, as explained in more detail below.

The outer annular portion 24 and the inner annular portion 26 are preferably integrally formed together as a one-piece unitary annular member that is separate from the reinforcement members 14. The outer annular portion 24 and the inner annular portion 26 are preferably configured to form a constant cross-sectional profile about the entire circumference of the rim 12 (i.e., about the entire circumference of the outer annular portion 24 and the inner annular portion 26), except for the absence of material at various openings and the presence of the reinforcement members 14, as explained below. Thus, the rim 12 is preferably symmetrical relative to a center plane P that is perpendicular to the center axis X of the wheel 10, except for the absence of material at various openings and the presence of the reinforcement members 14, as also explained below. The reinforcement members 14 are preferably formed as separate members that are fixedly coupled to the outer annular portion 24 and the inner annular portion 26 such that the reinforcement members 14 form parts of the annular rim 12. The reinforcement members 14 will be discussed in greater detail below.

The outer annular portion 24 and the inner annular portion 26 are preferably constructed of a substantially lightweight, rigid material, such as those materials, which are well known in the art. For example, the outer annular portion 24 and the inner annular portion 26 can be constructed of a suitable metallic material, such as plated steel, stainless steel, aluminum, magnesium or titanium, as well as other non-metallic materials, such as a carbon fiber composite. Preferably, the outer annular portion 24 and the inner annular portion 26 are both constructed of aluminum.

The reinforcement members 14 are also preferably constructed of a substantially lightweight, rigid material, such as those materials, which are well known in the art. For example, the reinforcement members 14 can be constructed of a suitable metallic material, such as plated steel, stainless steel, aluminum, magnesium or titanium, as well as other non-metallic materials, such as a carbon fiber composite. Preferably, the reinforcement members 14 are constructed as separate aluminum members from the outer annular portion 24 and the inner annular portion 26 by casting and/or machining. In other words, the reinforcement members 14 are preferably constructed of the same material as the outer annular portion 24 and the inner annular portion 26.

In any case, the outer annular portion 24, the inner annular portion 26 and the reinforcement members 14 are preferably constructed of materials that can be heat fused such as by brazing, welding and/or bonding the materials together such that the reinforcement members 14 provide permanent, rigid reinforcement to the annular rim 12. The term "heat fused" as used herein means when the material of one or more parts and possibly a third material are heated in order to bond or fuse the two parts together. Welding or brazing are two preferred types of heat fusing in accordance with the present invention. Techniques of heat fusing such as welding or brazing are generally well known in the art, and thus, will not be discussed and/or illustrated in detail herein.

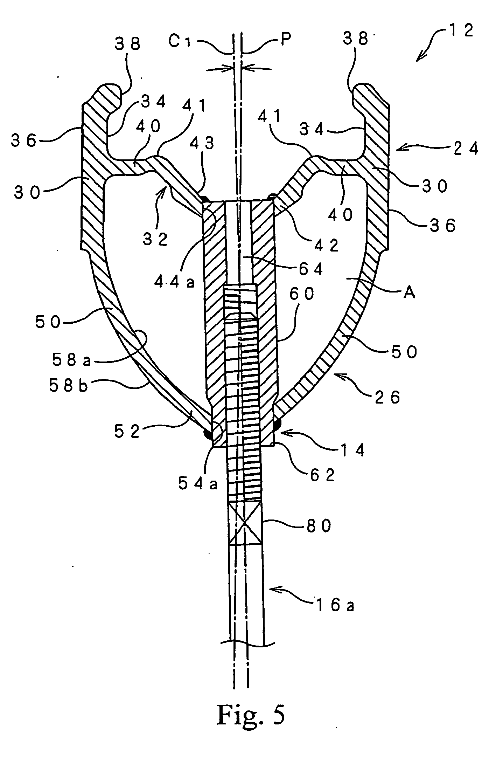

Referring still to Figures 1-8, the outer annular portion 24 basically includes a pair of annular side sections 30 and an annular outer bridge or connecting section 32. The annular connecting section 32 is fixedly coupled to the annular side sections 30. The annular connecting section 32 basically extends axially between the annular side sections 30 to form a substantially U-shaped tire receiving recess as seen in cross-section (Figures 5-8). More specifically, the annular connecting section 32 is fixedly coupled to the annular side sections 30 at radial positions between the inner and outer ends of the annular side sections 30, respectively.

The annular side sections 30 are preferably substantially parallel annular plate shaped members with each including an annular tire supporting surface 34 and an annular braking surface 36. The annular side sections 30 are preferably between about 1.1 and about 1.4 millimeters thick. The tire supporting surfaces 34 face each other and face the center plane P. The tire supporting surfaces 34 are configured with annular ribs 38 that are designed to retain beads (not shown) of the tubeless tire 18. The annular braking surfaces 36 face away from each other and outwardly away from the center plane P to engage conventional rim brakes. The annular side sections 30 are fixedly coupled to the inner annular portion 26, as explained below.

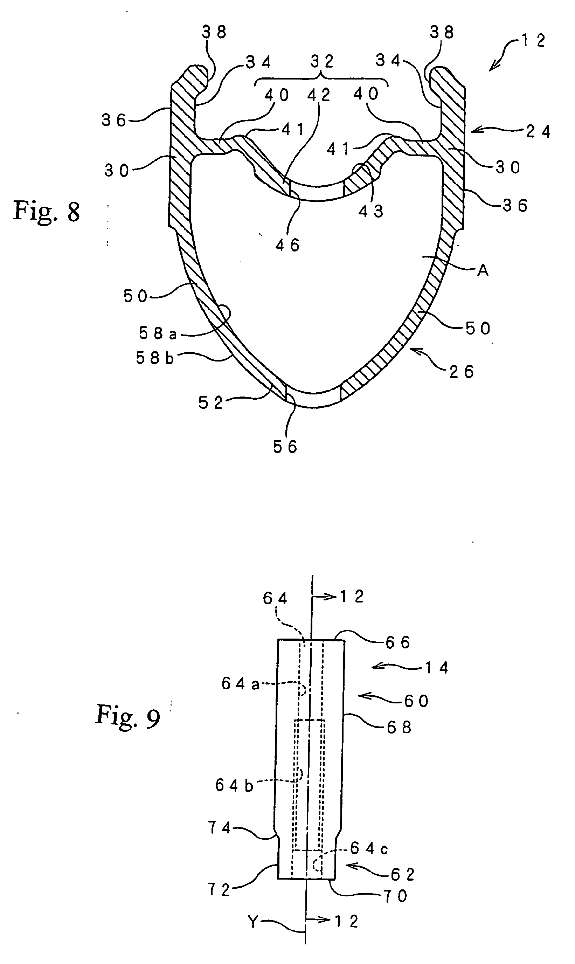

The annular connecting section 32 is a tubular member that has a varying thickness, preferably between about 0.8 and about 1.0 millimeters thick. The annular connecting section 32 is thicker in the central area that overlaps the center plane P, as best seen in Figure 8. The annular connecting section 32 preferably has a varying, contoured shape, as shown in Figures 5-8. The annular connecting section 32 basically includes a pair of annular legs 40 and a curved outer annular attachment element 42 extending between the annular legs 40.

The annular legs 40 are fixedly coupled between the annular side sections 30 and the outer annular attachment element 42. Thus, the annular legs 40 extend from the annular side sections 30 axially toward each other and toward the center plane P. The annular legs 40 are substantially cylindrically shaped with flat inner and outer surfaces. The curved outer attachment element 42 preferably has a thickness of about 1.0 millimeters, while the annular legs 40 preferably have a thickness of about 0.8 millimeters. A pair of annular ridges 41 are arranged at the intersections between the annular legs 40 and the outer attachment element 42. The outer attachment element 42 preferably has a concave tire support surface 43 with a radius of curvature of about 4.0 millimeters. Annular transition areas and the annular ridges 41 are arranged at axial ends of the outer attachment element 42 such that beads of the tubeless tire 18 can slide up the concave tire support surface 43 of the outer attachment element 42 to positions up against the tire supporting surfaces 34.

The outer annular attachment element 42 has a plurality of outer attachment openings 44a, 44b and 44c as well as an outer valve opening 46 formed therein. The outer annular portion 24 is preferably free of openings, except for the outer attachment openings 44a, 44b and 44c, and the outer valve opening 46. The outer attachment openings 44a, 44b and 44c as well the outer valve opening 46 are preferably circular shaped openings. The outer attachment openings 44a, 44b and 44c preferably each have a diameter of about 4.6 millimeters.

The plurality of outer attachment openings 44a, 44b and 44c are configured to have the spokes 16a, 16b and 16c coupled thereto, respectively, via the reinforcement members 14. Thus, the outer attachment openings 44a, 44b and 44c can be considered outer spoke attachment openings. The outer attachment openings 44a, 44b and 44c have center axes C₁, C₂ and C₃, respectively, that are aligned with the longitudinal center axes of the spokes 16a, 16b and 16c, respectively. Thus, preferably, there are ten of the outer attachment openings 44a, five of the outer attachment openings 44b and five of the outer attachment openings 44c. The outer attachment openings 44a, 44b and 44c are identical to each other except their orientations (inclinations) are slightly different in order to accommodate the orientations of the spokes 16a, 16b and 16c, respectively.

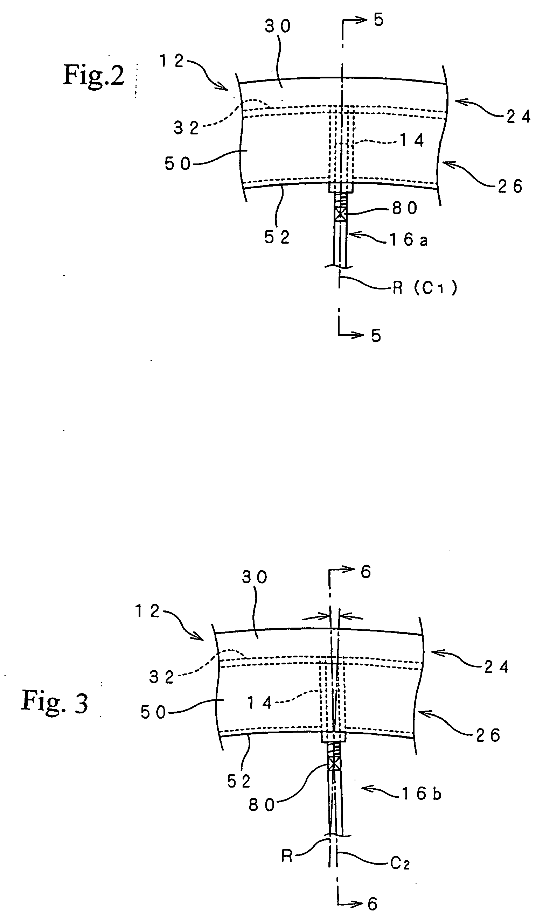

The center axes C₁, C₂ and C₃ are preferably angled about 0°, about -5° and about +5° relative to radial reference lines R extending in the radial direction from the rim 12 and passing through the center rotations axis X, respectively, as best seen in Figures 2, 3 and 4, respectively. There are an infinite numbers of radial lines R extending between the rim 12 and the center rotations axis X. The center axes C₁, C₂ and C₃ are also preferably angled about -4°, about +5.5° and about +6.8° relative to the center plane P of the rim 12, respectively, as best seen in Figures 5, 6 and 7, respectively.

Referring still to Figures 1-8, the inner annular portion 26 is a curved tubular member that has a U-shaped or V-shaped cross-sectional shape. The inner annular portion 26 preferably has a varying thickness between about 0.8 and about 1.0 millimeters. The inner annular portion 26 basically includes a pair of annular slanted sections 50 and an inner annular section 52 fixedly coupled to the slanted sections 50. The slanted sections 50 preferably have thicknesses of about 0.8 millimeters, while the inner annular section 52 preferably has a thickness of about 1.0 millimeters. Gradual transition areas are located between the annular slanted sections 50 and the inner annular section 52. Outer radial ends of the slanted sections 50 are fixedly coupled to inner radial ends of the annular side sections 30 of the outer annular portion 24. Inner radial ends of the slanted sections 50 are fixedly coupled to outer radial ends of the inner annular section 52.

The inner annular section or attachment element 52 has a plurality of inner attachment openings 54a, 54b and 54c as well as an inner valve opening 56 formed therein. The inner annular portion 26 is preferably free of openings, except for the inner attachment openings 54a, 54b and 54c, and the inner valve opening 56. The inner attachment openings 54a, 54b and 54c as well the inner valve opening 56 are preferably circular shaped openings. The inner attachment openings 54a, 54b and 54c are preferably slightly smaller than the outer attachment openings 44a, 44b and 44c in order to retain each reinforcement member 14 prior to fixedly coupling the reinforcement members 14 to the rim 12. The inner attachment openings 54a, 54b and 54c preferably have diameters of about 4.0 millimeters.

The plurality of inner attachment openings 54a, 54b and 54c are configured to have the spokes 16a, 16b and 16c coupled thereto, respectively, via the reinforcement members 14. Thus, the inner attachment openings 54a, 54b and 54c can be considered inner spoke attachment openings. The inner attachment openings 54a, 54b and 54c are aligned with the outer attachment openings 44a, 44b and 44c, respectively. Thus, the center axes C₁, C₂ and C₃, of the outer attachment openings 44a, 44b and 44c, are also the center axes of the inner attachment openings 54a, 54b and 54c, respectively. Moreover, , the center axes C₁, C₂ and C₃, of the outer attachment openings 44a, 44b and 44c, are also the center axes of the spokes 16a, 16b and 16c, respectively. Thus, there are preferably ten of the inner attachment openings 54a, five of the inner attachment openings 54b and five of the inner attachment openings 54c. The inner attachment openings 54a, 54b and 54c are identical to each other except their orientations (inclinations) are slightly different in order to accommodate the orientations of the spokes 16a, 16b and 16c, respectively.

The inner attachment openings 54a, 54b and 54c and the outer attachment openings 44a, 44b and 44c are angled in opposite directions relative to the center plane P in an alternating manner, as mentioned above. Specifically, the attachment openings 44a and 54a are angled in one direction relative to the center plane P, while the attachment openings 44b, 54b, 44c and 54c are angled in the opposite direction relative to the center plane P in an alternating manner between the attachment openings 44a and 54a, as best understood from Figures 1-4. In other words, the outer attachment openings 44a, 44b and 44c are arranged in order about the circumference of the rim 12 as follows: 44a, 44b, 44a, 44c, 44a, 44b, 44a, 44c, etc. The inner attachment openings 54a, 54b and 54c are also arranged in order about the circumference of the rim 12 as follows: 54a, 54b, 54a, 54c, 54a, 54b, 54a, 54c, etc.

The inner annular section 42 together with the annular slanted sections 40 define annular curved interior and exterior surfaces 58a and 58b of the inner annular portion 26. The exterior curved surface 58b is a convex surface while the interior surface 58a is a concave surface. The exterior curved surface 58b has a radius of curvature of about 5.0 millimeters, while the interior surface 58a has a radius of curvature of about 4.0 millimeters. The inner attachment openings 54a, 54b and 54c, and the inner valve opening 56 extend between the interior and exterior surfaces 58a and 58b of the inner annular portion 26.

Referring to Figures 1 and 8, the outer valve opening 46 and the inner valve opening 56 are configured to receive a conventional valve 48 therein in order to inflate the tubeless tire 18. In other words, the valve 48 is preferably designed for use with a tubeless tire 18. However, it will be apparent to those skilled in the art from this disclosure that the tire 18 could be a tube-type tire (not shown), and that the valve openings 46 and 56 could receive the valve of a tube (not shown) in a conventional manner. Thus, the valve openings 46 and 56 and/or the valve 48 can be designed for a tubeless tire in a conventional manner, and/or for a tube-type tire in a conventional manner. In any case, because the valve 48 is conventional, the valve 48 will not be discussed and/or illustrated in detail herein.

Referring now to Figures 1-12, the reinforcement members 14 will now be discussed in more detail. Each reinforcement member 14 is designed to be fixedly coupled to the rim 12 in order to couple one of the spokes 16a, 16b or 16c thereto. Specifically, each reinforcement member is preferably at least partially received in one of the outer attachment openings 44a, 44b and 44c, and at least partially received in a corresponding one of the inner attachment openings 54a, 54b and 54c. Preferably, each reinforcement member is fixedly coupled to both the outer annular portion 24 and the inner annular portion 26 by heat fusing.

Preferably, the rim 12 includes twenty of the reinforcement members 14 fixedly coupled thereto (i.e., a number of reinforcement members 14 corresponding to the number of spokes 16a, 16b and 16c). The reinforcement members 14 are identical to each other. Thus, only one of the reinforcement members 14 will be discussed in detail herein.

Referring mainly to Figures 9-12, each reinforcement member 14 is preferably an elongated tubular member with a circular shape. Each reinforcement member 14 is preferably constructed as a separate aluminum member by casting and/or machining. Each reinforcement member 14 basically includes an outer tubular portion 60, and inner tubular portion 62 and a through bore 64 extending through both the outer tubular portion 60 and the inner tubular portion 62. The outer tubular portion 60 is preferably fixedly coupled to the outer annular portion 24 of the rim 12 within one of the outer attachment openings 44a, 44b and 44c. The inner tubular portion 62 is preferably fixedly coupled to the inner annular portion 26 of the rim 12 within one of the inner attachment openings 54a, 54b and 54c. One of the spokes 16a, 16b and 16c is coupled within the through bore 64. Thus, each reinforcement member 14 can be considered a tubular spoke attachment member.

In this embodiment, the inner tubular portion 62 is preferably integrally formed with the outer tubular portion 60 as a one-piece, unitary member. However, it will be apparent to those skilled in the art from this disclosure that each reinforcement member 14 could be constructed as more than one-piece, as discussed below with reference to another preferred embodiment of the present invention. Additionally, in this embodiment, both the outer and inner tubular portions 60 and 62 preferably have cylindrical shapes. However, it will be apparent to those skilled in the art from this disclosure that the outer tubular portion 60 and/or the inner tubular portion 62 could have modified shapes as needed and/or desired, as discussed below with reference to other preferred embodiments of the present invention.

The outer tubular portion 60 basically includes an outer end surface 66 and a cylindrical outer exterior surface 68 extending from the outer end surface 66 toward the inner tubular portion 62. The outer end surface 66 is preferably an annular, circular shaped surface. The cylindrical outer exterior surface 68 is preferably sized and configured to be received in the outer attachment openings 44a, 44b and 44c. The cylindrical outer exterior surface 68 preferably has a diameter of about 4.6 millimeters.

The inner tubular portion 62 basically includes an inner end surface 70 and a cylindrical inner exterior surface 72. The inner end surface 70 is preferably an annular, circular shaped surface. The cylindrical inner exterior surface 72 is preferably sized and configured to be received in the inner attachment openings 54a, 54b and 54c. The cylindrical inner exterior surface 72 preferably has a diameter of about 4.0 millimeters. Thus, the inner tubular portion 62 is preferably smaller than the outer tubular portion 60. An annular exterior abutment surface 74 extends between the cylindrical outer surfaces 68 and 72. The annular abutment surface 74 is preferably an inclined, circular shaped surface. The abutment surface 74 is designed to contact the interior surface 58a of the inner annular portion 26.

The through bore 64 basically includes an outer unthreaded section 64a, a threaded central section 64b and an inner unthreaded section 64c. The sections 64a, 64b and 64c of the through bore 64 are preferably circular shaped sections that are aligned with each other such that the through bore 64 has a longitudinal center axis Y that is also the longitudinal center axis of the overall reinforcement member 14. Thus, each reinforcement member 14 is preferably symmetrical about its longitudinal center axis Y. One of the spokes 16a, 16b and 16c is threadedly coupled to the central threaded section 64b after the reinforcement member 14 is fixedly coupled to the rim 12. Thus, when the wheel 10 is assembled, the longitudinal center axis Y of each reinforcement member 14 is coincident with one of the center axes C₁, C₂ and C₃.

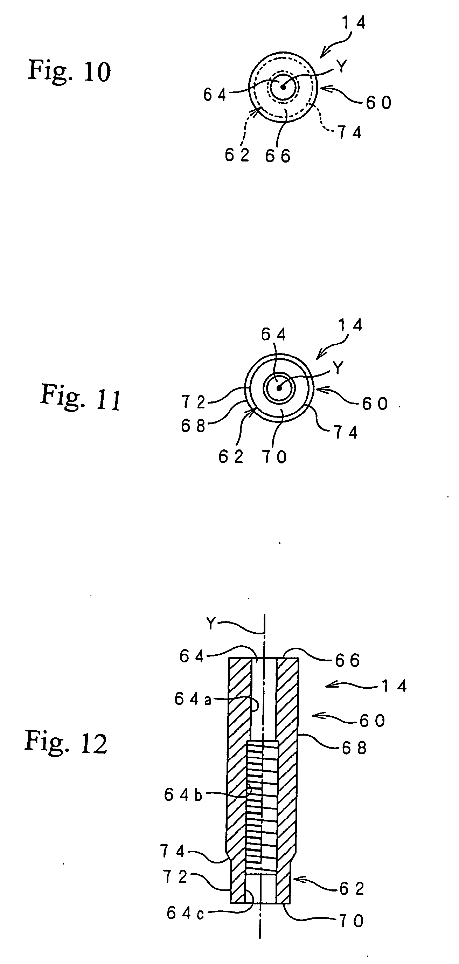

In this embodiment, the outer half of each reinforcement member 14 can be considered a first (outer) tubular spoke attachment portion, while the inner half of each reinforcement member 14 can be considered a second (inner) tubular spoke attachment portion, as best seen in Figures 9 and 12. A phantom dotted line is shown in Figures 9 and 12 as an example of a dividing line between the so-called first and second tubular spoke attachment portions of each reinforcement member 14. Accordingly, the outer and inner halves of each reinforcement member 14 together at least partially define a spoke receiving space (i.e., the through bore 64) that is at least partially threaded. Of course, it will be apparent to those skilled in the art from this disclosure that the reinforcement members 14 could have other configurations as needed and/or desired. However, preferably, the reinforcement members 14 are constructed such that forces from the spokes 16a, 16b and 16c are dispersed to both the outer annular portion 24 and the inner annular portion 26 of the rim 12. In other words, the so-called first tubular spoke attachment portion is preferably at least partially internally threaded and the so-called second tubular spoke attachment portion is also preferably at least partially internally threaded.

Each of the spokes 16a, 16b and 16c includes an outer end portion 80, an elongated central portion 82, an inner end portion 84 and one of the spoke nipples 17. The spokes 16a, 16b and 16c are identical to each other, except their orientations (inclinations), as mentioned above. Accordingly, only one of the spokes 16a, 16b and 16c (spoke 16a) will be discussed in detail herein. The outer end portion 80, the elongated central portion 82 and the inner end portion 84 of the spoke 16a are preferably integrally formed together as a one-piece, unitary metal member in a conventional manner. In any case, at least the outer end portion 80 and the elongated central portion 82 are preferably integrally formed together as a one-piece, unitary member.

The outer end portion 80 has external threads to engage one of the through bores 64 of one of the reinforcement members 14 (i.e., the central threaded section 64b). The outer end portion 80 of each spoke 16a also preferably has a square shaped section used to rotate or hold the spoke 16a. The inner end portion 84 of the spoke 16a also preferably has external threads with one of the spoke nipples 17 threadedly coupled thereto in a conventional manner. The spoke 16a is placed under tension between the center hub 20 and the rim 12 by rotating the spoke nipple 17 and/or the spoke 16a in a relatively conventional manner. The spoke 16a is preferably a conventional wire-type spoke that is constructed in a conventional manner. Thus, the spoke 16a will not be discussed and/or illustrated in detail herein except as related to the present invention.

Referring again to Figure 1, the center hub 20 with the free wheel 22 of the wheel 10 of the present invention is relatively conventional, except as explained and illustrated herein. Thus, the center hub 20 will not be discussed and/or illustrated in detail herein. Rather, the center hub 20 can basically be understood from U.S. Patent No. 6,431,658, assigned to Shimano Inc. Specifically, the center hub 20 of the present invention is similar to the rear hub disclosed in U.S. Patent No. 6,431,658, except the center hub 20 of the present invention utilizes more spokes (i.e., twenty spokes) that are circumferentially equally spaced apart at the rim 12, and that the radial spokes 16a of the present invention are mounted to the center hub 20 adjacent the free wheel 22.

More specifically, the center hub 20 of the present invention is similar to the hub utilized with Shimano's wheel model Nos. WH-M535 and WH-R535, except the center hub 20 of the present invention is designed to have twenty spokes 16a, 16b and 16c coupled thereto that are equally circumferentially spaced about the rim 12. Shimano's wheel model Nos. WH-M535 and WH-R535 are designed to have sixteen spokes coupled thereto in paired spoking arrangements at their rims. Thus, it will be apparent to those skilled in the art from this disclosure that the center hub 20 of the wheel 10 of the present invention has a tubular spoke attachment portion (adjacent the free wheel 22) with ten slots for coupling the ten spokes 16a therein, and five spoke attachment projections (at the opposite end from the freewheel 22) with each designed to have one of the spokes 16b and one of the spokes 16c coupled thereto via the spoke nipples 17.

It will also be apparent to those skilled in the art from this disclosure that such spoke attachment projections and the slots of the tubular spoke attachment portion of the center hub 20 should be arranged relative to each other such that the spokes 16a, 16b and 16c are coupled to the rim 12 at circumferentially equally spaced locations. In any case, the precise construction of the hub 20 of the wheel 10 of the present invention is not critical so long as the spokes 16a, 16b and 16c can be coupled thereto via the spoke nipples 17 at the orientations (inclinations) disclosed herein.

Referring now to Figures 1-12, the construction of the rim 12 will now be discussed in more detail. First, the annular rim 12 (i.e., separate from the reinforcement members 14) is preferably formed that includes the outer annular portion 24 and the inner annular portion 26. For example, the outer annular portion 24 and the inner annular portion 26 are preferably constructed by first extruding a length of aluminum with the cross-sectional shape illustrated in Figures 5-8. Next, the length of aluminum is preferably bent into a circular shape, and the ends of the length of aluminum are then welded together to form the rim 12 absent the reinforcement members 14.

The attachment openings 44a, 44b, 44c, 54a, 54b and 54a as well as the valve openings 46 and 56 are formed in the rim 12 before or after bending the length of material into the circular shape, preferably after bending the rim 12 into a circular shape. The reinforcement members 14 are then inserted through the outer attachment openings 44a, 44b and 44c and into the inner attachment openings 54a, 54b and 54c. The inner tubular portion 62 is inserted first until it is seated in one of the inner attachment openings 54a, 54b and 54c. Each reinforcement member 14 is then preferably fixedly coupled within the attachment openings 44a, 44b, 44c, 54a, 54b and 54a by heat fusing such as by welding or brazing around the outer periphery of each end surface 68 and 72 of each reinforcement member 14. Of course, the reinforcement members 14 can be inserted and then welded or brazed one at a time, simultaneously, etc. After fixedly coupling the reinforcement members 14 to the outer annular portion 24 and the inner annular portion 26, the ends of the reinforcement members can optionally be ground or otherwise shaped such that the concave tire support surface 43 remains a contiguous curved surface, except for the absence of material due to openings, and such that the exterior surface 58b of the inner annular portion 26 is relatively smooth.

The reinforcement members 14 are preferably constructed as individual one-piece members by casting, machining, or the like, as mentioned above. If the reinforcement members 14 are welded, preferably each reinforcement member 14 is welded by flash-butt or laser welding. In any case a thin bonding layer is formed to fuse the reinforcement members 14 to the outer annular portion 24 and the inner annular portion 26 of the rim 12 to prevent air leakage from the tubeless tire 18 around the outer peripheries of the reinforcement members 14.

Now the rim 12 is basically completed. After the rim 12 is basically completed, the spokes 16a, 16b and 16c are threadedly coupled to the reinforcement members 14 of the rim 12 and the central hub 20 via the spoke nipples 17. Then, the valve 48 and the tire 18 can be coupled to the rim 12 in a conventional manner. Preferably, a sealing, thread-locking and/or anti-loosening compound such as adhesive or the like is applied to the threaded outer end portions 80 of the spokes 16a, 16b and 16c, prior to threadedly coupling them within the through bores 64 of the reinforcement members 14. The compound prevents air leakage and loosening of the threaded outer end portions 80 after assembly and drying/curing of the compound. In addition to or instead of the sealing/locking compound, rubber seals or plugs (not shown in this embodiment) can be inserted such as by press-fitting into the unthreaded sections 64a of the through bores 64 to prevent air leakage.

The method of making the rim 12 discussed above is merely an example of one preferred method of making the rim 12 of the present invention. Thus, it will be apparent to those skilled in the art from this disclosure that the method steps described above could be performed in alternate orders in order to achieve the rim 12 of the present invention as needed and/or desired. Moreover, it will be apparent to those skilled in the art from this disclosure that additional or fewer method steps can be included in making the rim 12 of the present invention as needed and/or desired.

### SECOND EMBODIMENT

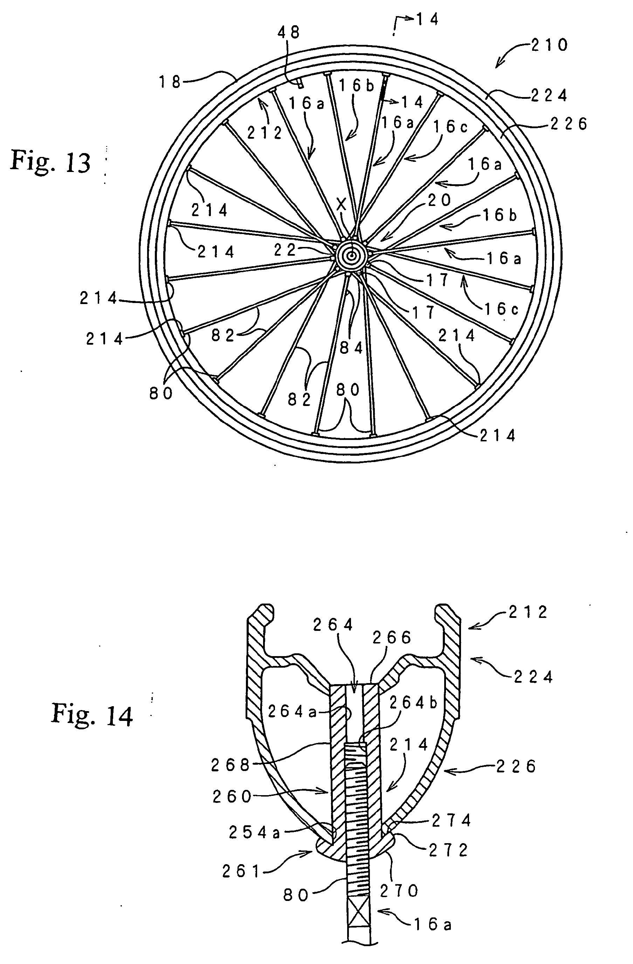

Referring now to Figures 13 and 14, a wheel 210 in accordance with a second embodiment of the present invention will now be explained. The wheel 210 of this second embodiment is identical to the wheel 10 of the first embodiment, except the wheel 210 includes a modified rim 212 that includes a plurality of modified reinforcement members 214. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. However, it will be apparent to those skilled in the art from this disclosure that the descriptions and illustrations of the first embodiment also apply to this second embodiment, except as explained and illustrated herein. In other words, the following description will focus mainly on the differences between this second embodiment and the first embodiment.

The rim 212 of this second embodiment basically includes an outer annular portion 224, a modified inner annular portion 226 and the modified reinforcement members 214. The outer annular portion 224 is identical to the outer annular portion 24 of the first embodiment. The inner annular portion 226 is also identical to the inner annular portion 26 of the first embodiment, except the inner annular portion 226 includes a plurality of modified inner attachment openings. The modified inner attachment openings of this second embodiment are identical to the inner attachment openings 54a, 54b and 54c of the first embodiment, respectively, except the inner attachment openings of this second embodiment are slightly larger so that the modified reinforcement members 214 can be inserted therein from the radially inner side thereof. In view of the similarity between the modified inner spoke attachment openings of this second embodiment with the inner attachment openings 54a, 54b and 54c of the first embodiment, only one modified inner attachment opening 254a is illustrated in detail herein. The inner attachment opening 254a preferably has a diameter of about 4.6 millimeters.

The reinforcement members 214 are identical to each other. Thus, only one of the reinforcement members 214 will be discussed and illustrated in detail herein. The reinforcement member 214 is identical to the reinforcement member 14 of the first embodiment, except the reinforcement member 214 has a modified shape in order to be inserted into the inner attachment opening 254a. Specifically, the reinforcement member 214 basically includes a tubular portion 260, an inner annular flange 261 and a through bore 264.

The tubular portion 260 has a configuration identical to the outer tubular portion 60 of the first embodiment, except the tubular portion 260 is longer to extend through the inner attachment opening 254a to the annular flange 261. Thus, the tubular portion 260 includes an outer end surface 266 and a cylindrical outer surface 268 that extends between the outer end surface 266 and the annular flange 261. The outer end surface 266 is identical to the outer end surface 66 of the first embodiment. The cylindrical outer surface 268 is identical to the outer surface 68 of the first embodiment, except the cylindrical outer surface 268 is longer. Thus, the cylindrical outer surface 268 preferably has a diameter of about 4.6 millimeters.

The through bore 264 extends through both the tubular portion 260 and the annular flange 261. The through bore 264 is identical to the through bore 64 of the first embodiment, except the through bore 264 is longer due to the presence of the annular flange 261 and the unthreaded inner section 64c of the first embodiment is omitted. Thus, the through bore 264 includes an outer unthreaded section 264a and a threaded section 264b.

The annular flange 261 basically includes an inner annular end surface 270, a tubular surface 272 and a rim contacting surface 274. The threaded section 264b of the through bore 264 extends from the inner end surface 270 toward the outer end surface 266. The inner end surface 270 preferably has a circular shape as viewed along the center longitudinal axis of the reinforcement member 214. However, the inner end surface 270 is a contoured (non-flat) surface that is preferably substantially parallel to the rim contacting surface 274. The rim contacting surface 274 preferably has a contour that corresponds to the contour of the inner annular portion 226 of the rim 212. The tubular surface 272 preferably has a circular shape as viewed along the center longitudinal axis of the reinforcement member 214. Of course, the inner end surface 270 and the tubular surface 272 could have an elliptical shape as viewed along the center longitudinal axis of the reinforcement member 214. In such an arrangement, the major diameter of the elliptical shape is preferably about twice as large as the minor diameter of the elliptical shape and the major diameter is measured in the circumferential direction of the rim 212.

Similar to the first embodiment, the outer half of each reinforcement member 214 can be considered a first (outer) tubular spoke attachment portion, while the inner half of each reinforcement member 214 can be considered a second (inner) tubular spoke attachment portion. Accordingly, the outer and inner halves of each reinforcement member 214 together at least partially define a spoke receiving space (i.e., the through bore 264) that is at least partially threaded.

### THIRD EMBODIMENT

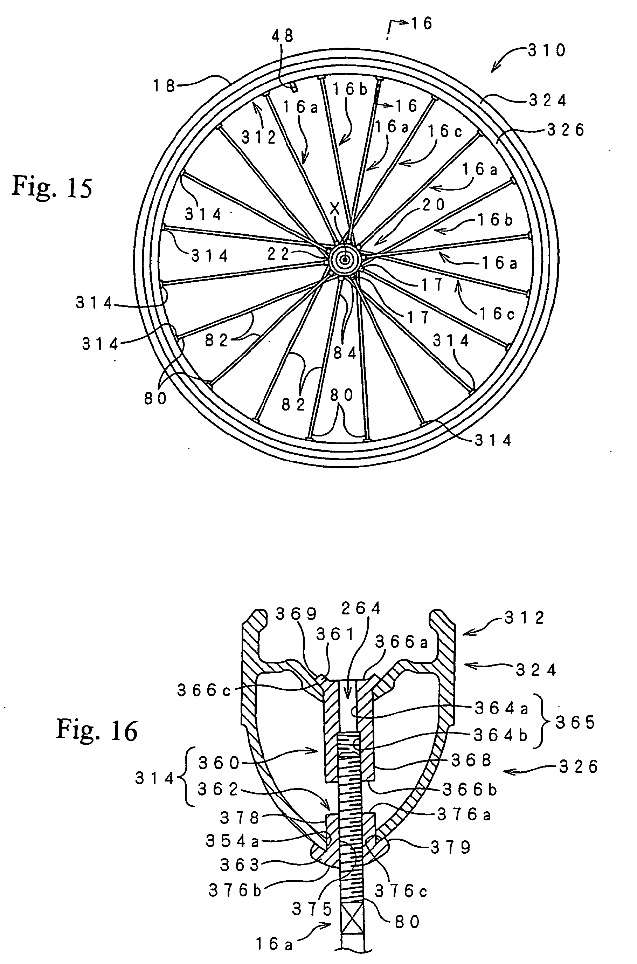

Referring now to Figures 15 and 16, a wheel 310 in accordance with a third embodiment of the present invention will now be explained. The wheel 310 of this third embodiment is identical to the wheel 10 of the first embodiment, except the wheel 310 includes a modified rim 312 that includes a plurality of modified reinforcement members 314. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity. However, it will be apparent to those skilled in the art from this disclosure that the descriptions and illustrations of the first embodiment also apply to this third embodiment, except as explained and illustrated herein. In other words, the following description will focus mainly on the differences between this third embodiment and the first embodiment.

The rim 312 of this third embodiment basically includes an outer annular portion 324, a modified inner annular portion 326 and the modified reinforcement members 314. The outer annular portion 324 is identical to the outer annular portion 24 of the first embodiment. The inner annular portion 326 is also identical to the inner annular portion 26 of the first embodiment, except the inner annular portion 326 includes a plurality of modified inner attachment openings. The modified inner attachment openings of this third embodiment are identical to the inner attachment openings 54a, 54b and 54c of the first embodiment, respectively, except the inner attachment openings of this third embodiment are slightly larger so that the modified reinforcement members 314 can be inserted therein from the radially inner side thereof. In view of the similarity between the modified inner spoke attachment openings of this third embodiment with the inner attachment openings 54a, 54b and 54c of the first embodiment, only one modified inner attachment opening 354a is illustrated in detail herein. The inner attachment opening 354a preferably has a diameter of about 4.6 millimeters.

The reinforcement members 314 are identical to each other. Thus, only one of the reinforcement members 314 will be discussed and illustrated in detail herein. The reinforcement member 314 is basically similar to the reinforcement member 214 of the second embodiment, except the reinforcement member 314 is constructed of two pieces. Also, in this embodiment, both of the pieces have an annular flange as explained below. Specifically, the reinforcement member 314 basically includes an outer tubular portion 360 with an outer annular flange 361, an inner tubular portion 362 with an inner annular flange 363 and a through bore 364. The outer tubular portion 360 is constructed as a separate member from the inner tubular portion 362.

The outer tubular portion 360 basically includes a through bore 365, an outer end surface 366a, an inner end surface 366b, a rim facing surface 366c, a cylindrical outer surface 368 and a tubular outer surface 369. The cylindrical outer surface 368 is similar to the outer surface 68 of the first embodiment. The cylindrical outer surface 368 has a diameter of about 4.6 millimeters. However, the rim facing or contacting surface 366c extends between the cylindrical outer surface 368 and the tubular outer surface 369 to partially define the outer annular flange 361. The tubular outer surface 369 extends between the outer end surface 366a and the rim facing surface 366c to further define the annular flange 361. The inner end surface 366b defines an inner end of the cylindrical outer surface 368.

The annular flange 361 preferably has a circular shape as viewed along the center longitudinal axis of the reinforcement member 314. The outer end surface 366a preferably has a circular shape as viewed along the center longitudinal axis of the reinforcement member 314. However, the outer end surface 366a is a contoured (non-flat) surface that is preferably substantially parallel to the rim facing or contacting surface 366c. The rim facing surface 366c preferably has a contour that corresponds to the contour of the outer annular portion 326 of the rim 312. The tubular surface 369 preferably has a circular shape as viewed along the center longitudinal axis of the reinforcement member 314. Of course, the outer end surface 366a and the tubular surface 369 could have an elliptical shape as viewed along the center longitudinal axis of the reinforcement member 314. In such an arrangement, the major diameter of the elliptical shape is preferably about twice as large as the minor diameter of the elliptical shape and the major diameter is measured in the circumferential direction of the rim 312.

The inner tubular portion 362 basically includes a through bore 375, an outer end surface 376a, an inner end surface 376b, a rim facing surface 376c, a cylindrical outer surface 378 and a tubular outer surface 379. The cylindrical outer surface 378 is similar to the outer surface 268 of the second embodiment. The cylindrical outer surface 378 has a diameter of about 4.6 millimeters. However, the rim facing or contacting surface 376c extends between the cylindrical outer surface 378 and the tubular outer surface 379 to partially define the inner annular flange 363. The tubular outer surface 379 extends between the inner end surface 376b and the rim facing surface 376c to further define the annular flange 363. The outer end surface 376a defines an outer end of the cylindrical outer surface 378.

The annular flange 363 preferably has a circular shape as viewed along the center longitudinal axis of the reinforcement member 314. The inner end surface 376b preferably has a circular shape as viewed along the center longitudinal axis of the reinforcement member 314. However, the inner end surface 376b is a contoured (non-flat) surface that is preferably substantially parallel to the rim contacting surface 376c. The rim contacting surface 376c preferably has a contour that corresponds to the contour of the inner annular portion 326 of the rim 312. The tubular surface 379 preferably has a circular shape as viewed along the center longitudinal axis of the reinforcement member 314. Of course, the inner end surface 376b and the tubular surface 379 could have an elliptical shape as viewed along the center longitudinal axis of the reinforcement member 314. In such an arrangement, the major diameter of the elliptical shape is preferably about twice as large as the minor diameter of the elliptical shape and the major diameter is measured in the circumferential direction of the rim 312.

The through bore 364 extends through both the outer tubular portion 360, the inner tubular portion 362 as well as the gap between the outer and inner tubular portions 360 and 362. Thus, the through bore 364 is at least partially defined by the through bores 365 and 375 of the outer and inner tubular portions 360 and 362, respectively. The through bore 364 is identical to the through bore 264 of the second embodiment, except the through bore 364 is longer due to the presence of the outer annular flange 361, and segmented due to the gap between the outer and inner tubular portions 360 and 362. Thus, the through bore 364 is basically defined by an unthreaded section 364a of the through bore 365, an outer threaded section 364b of the through bore 365, the gap between the outer and inner tubular portions 360 and 362, and the through bore 375. The through bore 375 is threaded along its entire length.

The outer tubular portion 360 of each reinforcement member 314 can be considered a first (outer) tubular spoke attachment portion, while the inner tubular portion 362 of each reinforcement member 314 can be considered a second (inner) tubular spoke attachment portion. Accordingly, the outer and inner tubular portions 360 and 362 of the reinforcement member 314 together at least partially define a spoke receiving space (i.e., the through bore 364) that is at least partially threaded.

### FOURTH EMBODIMENT

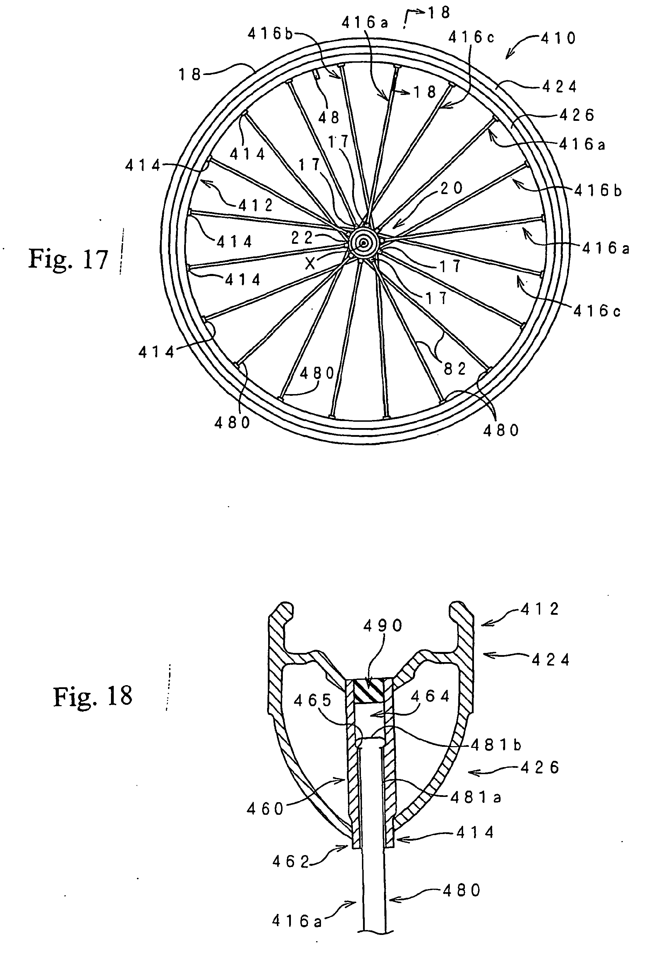

Referring now to Figures 17 and 18, a wheel 410 in accordance with a fourth embodiment of the present invention will now be explained. The wheel 410 of this fourth embodiment is identical to the wheel 10 of the first embodiment, except the wheel 410 includes a modified rim 412 that includes a plurality of modified reinforcement members 414 and a plurality of modified spokes 416a, 416b and 416c. In view of the similarity between the first and fourth embodiments, the parts of the fourth embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity. However, it will be apparent to those skilled in the art from this disclosure that the descriptions and illustrations of the first embodiment also apply to this fourth embodiment, except as explained and illustrated herein. In other words, the following description will focus mainly on the differences between this fourth embodiment and the first embodiment.

The rim 412 of this fourth embodiment is identical to the rim 12 of the first embodiment, except the rim 412 has the modified reinforcement members 414 coupled thereto. Thus, the rim 412 basically includes an outer annular portion 424 identical to the outer annular portion 24 of the first embodiment, an inner annular portion 426 identical to the inner annular portion 26 of the first embodiment and the modified reinforcement members 414.

The reinforcement members 414 are identical to each other. Thus, only one of the reinforcement members 414 will be discussed and illustrated in detail herein. The reinforcement member 414 is identical to the reinforcement member 14 of the first embodiment, except the reinforcement member 414 includes a through bore 464 that has a modified shape in order to accommodate the modified spokes 416a, 416b and 416c. Specifically, the reinforcement member 414 basically includes an outer tubular portion 460, an inner tubular portion 462 and the modified through bore 464. The modified through bore 464 is a stepped bore that is completely unthreaded in order to retain the modified spokes 416a, 416b and 416c therein. Specifically, the through bore 464 has an abutment surface 465 designed to retain one of the spokes 416a, 416b and 416c therein.

The modified spokes 416a, 416b and 416c are identical to the spokes 16a, 16b and 16c of the first embodiment, respectively, except each of the spokes 416a, 416b and 416c includes a modified outer end portion 480. Thus, the spokes 416a, 416b and 416c are identical to each other except for their orientations (inclinations). Accordingly, only one spoke 416a will be discussed and illustrated in detail herein. The outer end portion 480 of the spoke 416a has a shaft section 481a and an enlarged head 481b that is integrally formed with the shaft section 481a. The spoke 416a is configured to slide through the through bore 464 until the enlarged head 481b engages the annular abutment 465 to coupled the spoke 416a to the rim 412.

In this embodiment, a rubber seal or plug 490 (only one illustrated) is preferably mounted in each through bore 464 of each reinforcement member 414 to prevent air leakage. Of course, it will be apparent to those skilled in the art from this disclosure that the plug 490 could be used in conjunction with the first, second, and third embodiments if needed and/or desired, as mentioned above.

Similar to the first embodiment, the outer half of each reinforcement member 414 can be considered a first (outer) tubular spoke attachment portion, while the inner half of each reinforcement member 414 can be considered a second (inner) tubular spoke attachment portion. Accordingly, the outer and inner halves of each reinforcement member 414 together at least partially define a spoke receiving space (i.e., the through bore 464) that is a stepped, unthreaded bore.

### FIFTH EMBODIMENT

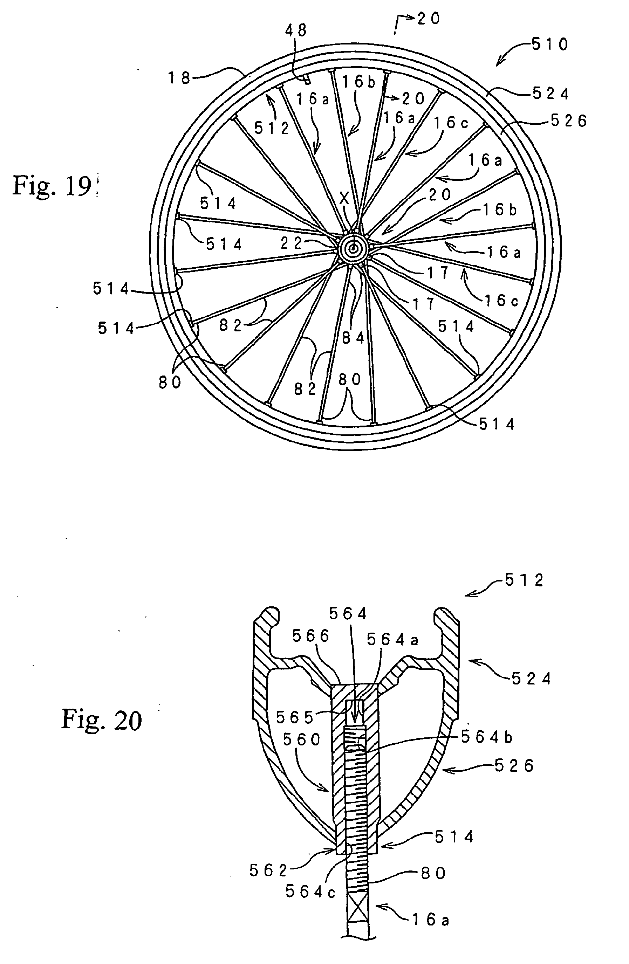

Referring now to Figures 19 and 20, a wheel 510 in accordance with a fifth embodiment of the present invention will now be explained. The wheel 510 of this fifth embodiment is identical to the wheel 10 of the first embodiment, except the wheel 510 includes a modified rim 512 that includes a plurality of modified reinforcement members 514. In view of the similarity between the first and fifth embodiments, the parts of the fifth embodiment that are identical to the parts of the first embodiment will be given the same reference numerals as the parts of the first embodiment. Moreover, the descriptions of the parts of the fifth embodiment that are identical to the parts of the first embodiment may be omitted for the sake of brevity. However, it will be apparent to those skilled in the art from this disclosure that the descriptions and illustrations of the first embodiment also apply to this fifth embodiment, except as explained and illustrated herein. In other words, the following description will focus mainly on the differences between this fifth embodiment and the first embodiment.

The rim 512 of this fifth embodiment is identical to the rim 12 of the first embodiment, except the rim 512 has the modified reinforcement members 514 coupled thereto. Thus, the rim 512 basically includes an outer annular portion 524 identical to the outer annular portion 24 of the first embodiment, an inner annular portion 526 identical to the inner annular portion 26 of the first embodiment and the modified reinforcement members 514.

The reinforcement members 514 are identical to each other. Thus, only one of the reinforcement members 514 will be discussed and illustrated in detail herein. The reinforcement member 514 is identical to the reinforcement member 14 of the first embodiment, except the reinforcement member 514 includes a partially threaded blind bore 564 rather than the through bore 64 of the first embodiment. Thus, the reinforcement member 514 basically includes a modified outer tubular portion 560, an inner tubular portion 562 identical to the inner tubular portion 62 of the first embodiment and the blind bore 564. The blind bore 564 has an identical configuration to the through bore 64 of the first embodiment, except it is shorter, i.e. enclosed, at its outer end. Thus, the blind bore 564 has a stop or end surface 565, an unthreaded outer section 564a, a threaded central section 564b and an inner unthreaded section 564c. The central section 564b and the inner section 564c are identical to the sections 64b and 64c of the first embodiment, respectively. The outer section 564a is shorter than the section 64a of the first embodiment due to the stop surface 565. Accordingly, the outer tubular portion 560 includes a circular, flat outer end surface 566 rather than the annular end surface 66 of the first embodiment.

In this embodiment, the adhesive and/or the rubber plugs mentioned in reference to the previous embodiments can be eliminated due to the configuration of the blind bore 564. In other words, the blind bore 564 eliminates the need to seal air leakage within the tubular reinforcement members. Of course, it will be apparent to those skilled in the art from this disclosure that the teachings of this fifth embodiment could be used in conjunction with or applied to the second and third embodiments if needed and/or desired.

Similar to the first embodiment, the outer half of each reinforcement member 514 can be considered a first (outer) tubular spoke attachment portion, while the inner half of each reinforcement member 514 can be considered a second (inner) tubular spoke attachment portion. Accordingly, the outer and inner halves of each reinforcement member 514 together at least partially define a spoke receiving space (i.e., the blind bore 564) that is at least partially threaded.

As used herein, directional terms such as "circumferentially, radially, axially, peripherally" as well as any other similar directional terms refer to those directions relative to a bicycle wheel designed to rotate about a center axis. Accordingly, these terms, as utilized to describe the present invention should be interpreted relative to the bicycle wheel and center axis.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle rim comprising:
an outer annular portion (24) adapted to receive a tire thereon, said outer annular portion having an outer spoke attachment opening (44);
an inner annular portion (26) fixedly coupled with said outer annular portion to form an annular hollow area therebetween, said inner annular portion having an inner spoke attachment opening (54) aligned with said outer spoke attachment opening;
a first tubular spoke attachment portion (60) fixedly coupled to said outer annular portion at said outer spoke attachment opening; and
a second tubular spoke attachment portion (62) fixedly coupled to said inner annular portion at said inner spoke attachment opening;
said first and second tubular spoke attachment portions defining a spoke receiving spacer (64), **characterized in that** at least one of said first and second tubular spoke attachment portions is heat fused to one of said outer and inner annular portions, respectively.

2. The bicycle rim according to claim 1, wherein
said outer annular portion includes a plurality of circumferentially spaced outer spoke attachment openings with a plurality of first tubular spoke attachment portions fixedly coupled to said outer annular portion at said outer spoke attachment openings;
said inner annular portion includes a plurality of circumferentially spaced inner spoke attachment openings with a plurality of second tubular spoke attachment portions fixedly coupled to said inner annular portion at said inner spoke attachment openings, said inner spoke attachment openings being aligned with said outer spoke attachment openings; and
at least one of said first tubular spoke attachment portions and said second tubular spoke attachment portions being heat fused to one of said outer and inner annular portions, respectively.

3. The bicycle rim according to claim 1 or 2, wherein
said first tubular spoke attachment portion(s) is/are heat fused to said outer annular portion.

4. The bicycle rim according to claim 1, 2 or 3, wherein
said second tubular spoke attachment portion(s) is/are heat fused to said inner annular portion.

5. The bicycle rim according to any one of claims 1 to 4, wherein
respective first and second tubular spoke attachment portions are integrally formed together as a one-piece, unitary member with a longitudinally extending internal passageway that forms said spoke receiving space.

6. The bicycle rim according to claim 5, wherein
said internal passageway(s) is/are at least partially threaded.

7. The bicycle rim according to claim 5 or 6, wherein
said internal passageway(s) is/are a through bore or a blind bore.

8. The bicycle rim according to claim 5, wherein
said internal passageway(s) is/are a stepped through bore with an internal abutment surface that forms said spoke receiving space.

9. The bicycle rim according to any one of claims 1 to 4, wherein
respective first and second tubular spoke attachment portions are two separate members.

10. The bicycle rim according to claim 9, wherein
each of the first and second tubular spoke attachment portions has an internal bore formed therein that is at least partially threaded such that said internal bores of said first and second tubular spoke attachment portions at least partially define said spoke receiving space.

11. The bicycle rim according to any one of claims 1 to 10, wherein
said first tubular spoke attachment portion(s) is/are at least partially located within said outer spoke attachment opening(s); and
said second tubular spoke attachment portion(s) is/are at least partially located within said inner spoke attachment opening(s).

12. The bicycle rim according to claim 11, wherein
said first tubular spoke attachment portion(s) extend(s) radially inwardly from said outer annular portion into said hollow area of said rim; and
said second tubular spoke attachment portion(s) extend(s) radially outwardly from said inner annular portion into said hollow area of said rim.

13. The bicycle rim according to any one of claims 1 to 12, wherein
at least one of said first tubular spoke attachment portion(s) and said second tubular spoke attachment portion(s) is/are welded to said one of said outer and inner annular portions, respectively.

14. The bicycle rim according to any one of claims 1 to 13, wherein
at least one of said first tubular spoke attachment portion(s) and said second tubular spoke attachment portion(s) is/are brazed to said one of said outer and inner annular portions, respectively.

15. A bicycle wheel comprising:
a bicycle rim according to any one of claims 1 to 14, wherein
said outer annular portion is having a plurality of circumferentially spaced outer spoke attachment openings,
said inner annular portion is having a plurality of circumferentially spaced inner spoke attachment openings aligned with said outer spoke attachment openings,
a plurality of first tubular spoke attachment portions is fixedly coupled to said outer annular portion at said outer spoke attachment openings, each of said first tubular spoke attachment portions having a first internal bore,
a plurality of second tubular spoke attachment portions is fixedly and directly coupled to said inner annular portion at said inner spoke attachment openings, each of said second tubular spoke attachment portions having a second internal bore that is aligned with one of said first internal bores to form a spoke receiving space, each spoke receiving space being at least partially threaded;
a plurality of spokes with each of said spokes including an outer end portion, an inner end portion and an elongated central portion extending between said outer end portion and said inner end portion, each of said outer end portions of said spokes being integrally formed with one of said elongated central portions as a one-piece, unitary member, each of said outer end portions of said spokes being directly threadedly coupled within one of said spoke receiving spaces; and
a central hub with said inner end portions of said spokes coupled thereto.

16. The bicycle wheel according to claim 15, wherein
each of said inner end portions of said spokes includes a threaded shaft section that is integrally formed with one of said elongated central portions as a one-piece, unitary member, and
each of said threaded shaft sections is coupled to said central hub via a spoke nipple threadedly mounted thereon.

## Patentansprüche

1. Fahrradfelge umfassend:
einen äußeren ringförmigen Abschnitt (24), der angepasst ist, einen Reifen daran aufzunehmen, wobei der äußere ringförmige Abschnitt eine äußere Speichenanbringöffnung (44) aufweist;
einen inneren ringförmigen Abschnitt (26), der fest mit dem äußeren ringförmigen Abschnitt gekoppelt ist, um einen ringförmigen Hohlbereich dort dazwischen auszubilden, wobei der innere ringförmige Abschnitt eine innere Speichenanbringöffnung (54) aufweist, die mit der äußeren Speichenanbringöffnung ausgerichtet ist;
einen ersten röhrenförmigen Speichenanbringabschnitt (60), der fest an den äußeren ringförmigen Abschnitt an der äußeren Speichenanbringöffnung gekoppelt ist; und
einen zweiten röhrenförmigen Speichenanbringabschnitt (62), der fest an den inneren ringförmigen Abschnitt an der inneren Speichenanbringöffnung gekoppelt ist;
wobei die ersten und zweiten röhrenförmigen Speichenanbringabschnitte einen Speichenaufnahmeraum (64) definieren, **dadurch gekennzeichnet, dass** zumindest einer der ersten und zweiten röhrenförmigen Speichenanbringabschnitte jeweils an einen der äußeren und inneren ringförmigen Abschnitte wärmebefestigt ist.

2. Fahrradfelge gemäß Anspruch 1, wobei
der äußere ringförmige Abschnitt eine Vielzahl von in Umfangsrichtung beabstandeten äußeren Speichenanbringöffnungen mit einer Vielzahl von ersten röhrenförmigen Speichenanbringabschnitten umfasst, die fest an den äußeren ringförmigen Abschnitt an den äußeren Speichenanbringöffnungen gekoppelt sind;
der innere ringförmige Abschnitt eine Vielzahl von in Umfangsrichtung beabstandeten inneren Speichenanbringöffnungen mit einer Vielzahl von zweiten röhrenförmigen Speichenanbringabschnitten umfasst, die fest an den inneren ringförmigen Abschnitt an den inneren Speichenanbringöffnungen gekoppelt sind, wobei die inneren Speichenanbringöffnungen mit den äußeren Speichenanbringöffnungen ausgerichtet sind; und
zumindest einer der ersten röhrenförmigen Speichenanbringabschnitte und der zweiten röhrenförmigen Speichenanbringabschnitte jeweils an einen der äußeren und inneren ringförmigen Abschnitte wärmebefestigt ist.

3. Fahrradfelge gemäß Anspruch 1 oder 2, wobei
der (die) erste(n) röhrenförmige(n) Speichenanbringabschnitt(e) an den äußeren ringförmigen Abschnitt wärmebefestigt ist (sind).

4. Fahrradfelge gemäß Anspruch 1, 2 oder 3, wobei
der (die) zweite(n) röhrenförmige(n) Speichenanbringabschnitt(e) an den inneren ringförmigen Abschnitt wärmebefestigt ist (sind).

5. Fahrradfelge gemäß einem der Ansprüche 1 bis 4, wobei
jeweilige erste und zweite röhrenförmige Speichenanbringabschnitte integral als ein einstückiges, einteiliges Element mit einer sich längs erstreckenden Innenpassage zusammen ausgebildet sind, die den Speichenaufnahmeraum bildet.

6. Fahrradfelge gemäß Anspruch 5, wobei
die Innenpassage(n) zumindest teilweise mit einem Gewinde versehen ist (sind).

7. Fahrradfelge gemäß Anspruch 5 oder 6, wobei
die Innenpassage(n) einer Durchgangsbohrung oder einer Blindbohrung entspricht (entsprechen).

8. Fahrradfelge gemäß Anspruch 5, wobei
die Innenpassage(n) einer gestuften Durchgangsbohrung mit einer inneren Anlagefläche entspricht (entsprechen), die den Speichenaufnahmeraum bildet.

9. Fahrradfelge gemäß einem der Ansprüche 1 bis 4, wobei
jeweilige erste und zweite röhrenförmige Speichenanbringabschnitte zwei separate Elemente sind.

10. Fahrradfelge gemäß Anspruch 9, wobei
jeder der ersten und zweiten röhrenförmigen Speichenanbringabschnitte eine darin ausgebildete Innenbohrung aufweist, die zumindest teilweise mit einem Gewinde versehen ist, so dass die Innenbohrungen der ersten und zweiten röhrenförmigen Speichenanbringabschnitte zumindest teilweise den Speichenaufnahmeraum definieren.

11. Fahrradfelge gemäß einem der Ansprüche 1 bis 10, wobei
der (die) erste(n) röhrenförmige(n) Speichenanbringabschnitt(e) zumindest teilweise in der (den) äußeren Speichenanbringöffnung(en) angeordnet ist (sind); und
der (die) zweite(n) röhrenförmige(n) Speichenanbringabschnitt(e) zumindest teilweise in der (den) inneren Speichenanbringöffnung(en) angeordnet ist (sind).

12. Fahrradfelge gemäß Anspruch 11, wobei
der (die) erste(n) röhrenförmige(n) Speichenanbringabschnitt(e) sich radial nach innen von dem äußeren ringförmigen Abschnitt in den Hohlbereich der Felge erstreckt (erstrecken); und
der (die) zweite(n) röhrenförmige(n) Speichenanbringabschnitt(e) sich radial nach außen von dem inneren ringförmigen Abschnitt in den Hohlbereich der Felge erstreckt (erstrecken).

13. Fahrradfelge gemäß einem der Ansprüche 1 bis 12, wobei
der (die) erste(n) röhrenförmige(n) Speichenanbringabschnitt(e) und/oder der (die) zweite(n) röhrenförmige(n) Speichenanbringabschnitt(e) jeweils an den einen der äußeren und inneren ringförmigen Abschnitte geschweißt ist (sind).

14. Fahrradfelge gemäß einem der Ansprüche 1 bis 13, wobei
der (die) erste(n) röhrenförmige(n) Speichenanbrineabschnitt(e) und/oder der (die) zweite(n) röhrenförmige(n) Speichenanbringabschnitt(e) jeweils an den einen der äußeren und inneren ringförmigen Abschnitte gelötet ist (sind).

15. Fahrradrad umfassend:
eine Fahrradfelge gemäß einem der Ansprüche 1 bis 14, wobei
der äußere ringförmige Abschnitt eine Vielzahl von in Umfangsrichtung beabstandeten äußeren Speichenanbringöffnungen aufweist,
der innere ringförmige Abschnitt eine Vielzahl von in Umfangsrichtung beabstandeten inneren Speichenanbringöffnungen aufweist, die mit den äußeren Speichenanbringöffnungen ausgerichtet sind,
wobei eine Vielzahl von ersten röhrenförmigen Speichenanbringabschnitten fest an den äußeren ringförmigen Abschnitt an den äußeren Speichenanbringöffnungen gekoppelt ist, wobei jeder der ersten röhrenförmigen Speichenanbringabschnitte eine erste Innenbohrung aufweist,
wobei eine Vielzahl von zweiten röhrenförmigen Speichenanbringabschnitten fest und direkt an den inneren ringförmigen Abschnitt an den inneren Speichenanbringöffnungen gekoppelt ist, wobei jeder der zweiten röhrenförmigen Speichenanbringabschnitte eine zweite Innenbohrung aufweist, die mit einer der ersten Innenbohrungen ausgerichtet ist, um einen Speichenaufnahmeraum zu bilden, wobei jeder Speichenaufnahmeraum zumindest teilweise mit einem Gewinde versehen ist;
eine Vielzahl von Speichen, wobei jede der Speichen einen äußeren Endabschnitt, einen inneren Endabschnitt und einen länglichen Mittelabschnitt, der sich zwischen dem äußeren Endabschnitt und dem inneren Endabschnitt erstreckt, umfasst, wobei jeder der äußeren Endabschnitte der Speichen integral mit einem der länglichen Mittelabschnitte als ein einteiliges, einheitliches Element ausgebildet ist, wobei jeder der äußeren Endabschnitte der Speichen direkt gewindeartig in einem der Speichenaufnahmeräume gekoppelt ist; und
eine Mittelnabe mit den inneren Endabschnitten der Speichen daran gekoppelt.

16. Fahrradrad gemäß Anspruch 15, wobei
jeder der inneren Endabschnitte der Speichen eine Gewindeschaftsektion umfasst, die integral mit einem der länglichen Mittelabschnitte als ein einteiliges, einheitliches Element ausgebildet ist, und wobei
jede der Gewindeschaftsektionen an die Mittelnabe über einen Speichennippel, der gewindeartig daran montiert ist, gekoppelt ist.

## Revendications

1. Jante de bicyclette comprenant :
une partie annulaire externe (24), adaptée pour recevoir un pneu, la partie annulaire externe ayant une ouverture d'attache de rayon externe (44) ;
une partie annulaire interne (26), couplée fixement à la partie annulaire externe pour former une zone creuse annulaire entre les deux, la partie annulaire interne ayant une ouverture d'attache de rayon interne (54), alignée avec ladite ouverture d'attache de rayon externe ;
une première partie tubulaire d'attache de rayon (60), couplée fixement à la partie annulaire externe, au niveau de l'ouverture d'attache de rayon externe ; et
une deuxième partie tubulaire d'attache de rayon (62), couplée fixement à la partie annulaire interne, au niveau de ladite ouverture d'attache de rayon interne ;
les première et deuxième parties tubulaires d'attache de rayon définissant un espace de réception de rayon (64), **caractérisée en ce qu'**au moins l'une desdites première et deuxième parties tubulaires d'attache de rayon est assemblée par fusion à l'une desdites parties annulaires externe et interne, respectivement.

2. Jante de bicyclette selon la revendication 1, dans laquelle
la partie annulaire externe comprend une pluralité d'ouvertures d'attache de rayon externes espacées circonférentiellement, avec une pluralité de premières parties tubulaires d'attache de rayon fixement couplée à la partie annulaire externe, au niveau desdites ouvertures d'attache de rayon externes ; et
la partie annulaire interne comprend une pluralité d'ouvertures d'attache de rayon internes espacées circonférentiellement, avec une pluralité de deuxièmes parties tubulaires d'attache de rayon fixement couplées à la partie annulaire interne, au niveau des ouvertures d'attache de rayon internes, les ouvertures d'attache de rayon internes étant alignées avec les ouvertures d'attache de rayon externes, et
au moins une desdites premières parties tubulaires d'attache de rayon et deuxièmes parties tubulaires d'attache de rayon étant assemblée par fusion à une desdites parties annulaires externes et internes, respectivement.

3. Jante de bicyclette selon la revendication 1 ou 2, dans laquelle la/les première(s) partie(s) tubulaire(s) d'attache de rayon est/sont assemblée(s) par fusion à ladite partie annulaire externe.

4. Jante de bicyclette selon la revendication 1, 2 ou 3, dans laquelle la/les deuxième(s) partie(s) tubulaire(s) d'attache de rayon est/sont assemblée(s) par fusion à la partie annulaire interne.

5. Jante de bicyclette selon l'une quelconque des revendications 1 à 4, dans laquelle les première et deuxième parties tubulaires d'attache de rayon respectives sont intégralement formées ensemble, comme un élément unitaire, en un seul morceau, avec un passage interne s'étendant longitudinalement, qui forme ledit espace de réception de rayon.

6. Jante de bicyclette selon la revendication 5, dans laquelle le/les passage(s) interne(s) est/sont au moins partiellement fileté(s).

7. Jante de bicyclette selon la revendication 5 ou 6, dans laquelle le/les passage(s) inteme(s) est/sont un alésage traversant ou un alésage aveugle.

8. Jante de bicyclette selon la revendication 5, dans laquelle la/les passage(s) interne(s) est/sont un alésage traversant en marche avec une surface de butée interne qui forme ledit espace de réception de rayon.

9. Jante de bicyclette selon l'une quelconque des revendications 1 à 4, dans laquelle lesdites première et deuxième parties tubulaires d'attache de rayon respectives sont deux éléments séparés.

10. Jante de bicyclette selon la revendication 9, dans laquelle chacune des première et deuxième parties d'attache de rayon a un alésage interne qui y est formé, qui est au moins partiellement fileté, de sorte que les alésages internes desdites première et deuxième parties tubulaires d'attache de rayon définissent au moins partiellement ledit espace de réception de rayon.

11. Jante de bicyclette selon l'une quelconque des revendications 1 à 10, dans laquelle
la/les première(s) partie(s) tubulaire(s) d'attache de rayon est/sont au moins partiellement située(s) à l'intérieur de la/des ouverture(s) d'attache de rayon externe(s) ; et
la/les deuxième(s) partie(s) tubulaire(s) d'attache de rayon est/ sont au moins partiellement située(s) à l'intérieur de la/des ouverture(s) d'attache de rayon interne(s).

12. Jante de bicyclette selon la revendication 11, dans laquelle la/les première(s) partie(s) tubulaire(s) d'attache de rayon s'étende(nt) radialement vers l'intérieur à partir de ladite partie annulaire externe vers ladite zone creuse de la jante ; et
la /les deuxième(s) partie(s) tubulaire(s) d'attache de rayon s'étende(nt) radialement vers l'extérieur à partir de la partie annulaire interne dans ladite zone creuse de la jante.

13. Jante de bicyclette selon l'une quelconque des revendications 1 à 12, dans laquelle au moins une des première(s) partie(s) tubulaire(s) d'attache de rayon et deuxième(s) partie(s) tubulaire(s) d'attache de rayon est/sont soudée(s) à l'une des parties annulaires externe et interne, respectivement.

14. Jante de bicyclette selon l'une quelconque des revendications 1 à 13, dans laquelle au moins une des première(s) partie(s) tubulaire(s) d'attache de rayon et deuxième(s) partie(s) tubulaire(s) d'attache de rayon est/sont brasée(s) à l'une des parties annulaires externe et interne, respectivement.

15. Jante de bicyclette comprenant :
une jante de bicyclette selon l'une quelconque des revendications 1 à 14, dans laquelle
la partie annulaire externe a une pluralité d'ouvertures d'attache de rayon externes espacées circonférentiellement,
la partie annulaire interne a une pluralité d'ouvertures d'attache de rayon internes espacées circonférentiellement, alignées avec les ouvertures d'attache de rayon externes,
une pluralité de premières parties d'attache de rayon tubulaires est couplée fixement à la partie annulaire externe, au niveau des ouvertures d'attache de rayon externes, chacune des premières parties tubulaire d'attache de rayon ayant un premier alésage interne,
une pluralité de deuxièmes parties tubulaires d'attache de rayon est couplée fixement et directement à la partie annulaire interne, au niveau des ouvertures d'attache de rayon internes, chacune des deuxième parties tubulaires d'attache de rayon ayant un deuxième alésage interne, qui est aligné avec l'un des premiers alésage interne, afin de former une espace de réception de rayon, chaque espace de réception de rayon étant au moins partiellement fileté ;
une pluralité de rayons, chacun des rayons comprenant une partie d'extrémité externe, une partie d'extrémité interne, et une partie centrale élongée s'étendant entre la partie d'extrémité externe et la partie d'extrémité interne, chacune des parties d'extrémité externes des rayons étant intégralement formée avec une des parties centrales élongées comme un élément unitaire, en un seul morceau, chacune des parties d'extrémité externes des rayons étant directement couplée par filetage dans l'un des espaces de réception de rayon ; et
un moyeu central, avec les parties d'extrémité internes des rayons qui y sont couplées.

16. Roue de bicyclette selon la revendication 15, dans laquelle chacune des parties d'extrémité internes des rayons comprend une section d'axe filetée qui est intégralement formée avec l'une des parties centrales élongées en tant qu'élément unitaire, en un seul morceau, et
chacune des sections d'axe filetées est couplée au moyeu central par l'intermédiaire d'un téton de rayon qui y est monté par filetage.
